# EUROPEAN PATENT APPLICATION

(11) **EP 1 120 988 A2**
(43) Date of publication of application: **01.08.2001**
(21) Application number: 01400171.3
(22) Date of filing: 19.01.2001
(51) Int. Cl.: H04Q 11/00

(54) **Method for upgrading fiber optics networks rings**

(30) Priority: 26.01.2000 IT TO200076
(71) Applicant: ALCATEL, 75008 Paris (FR)
(72) Inventor: Cicchese, Guido Manlio, 20124 Milano (IT); Colciago, Roberto, 20038 Seregno (Milano) (IT); Conti, Mariangela, 20050 Villa Raverio (Milano) (IT); De Girolamo, Claudio, 20094 Corsico (Milano) (IT); Lometti, Alberto, 23807 Merate (Lecco) (IT)
(74) Representative: Colombo, Stefano Paolo

(57) **Abstract**

Method for upgrading a fiber optics network ring, in particular MS-SPRING ring, providing for laying in a first time a fiber optics network ring (1) having a first number of fiber optics (CN1, CN2) and for adding in a second time the functionalities associated to a ring (11) having a second number of fiber optics, said second number of fiber optics being greater than the first. According to the invention, said functionalities are obtained by carrying out a ring (21) that uses on the fibers (CN1, CN2) that constitutes the first number of fiber optics a bidirectional working functionality.

## Description

The present invention relates to a method for upgrading a fiber optics network ring, in particular MS-SPRING ring. The present invention also relates to a fiber optics network ring upgraded by such a method.

The present invention concerns a method for signaling failures in telecommunication networks, in particular MS-SPRING fiber optics telecommunication networks, comprising nodes joined by spans, which method provides for protecting information traffic on said telecommunications networks by defining an operative channel and a protection channel and switching operations between said operating channel and protection channel, said switching operations being driven by protection words exchanged between the nodes of said telecommunications network.

In present telecommunications networks it has become extremely important to have the possibility of recover failures occurring in the networks themselves without interfering with service functionality.

Therefore, telecommunication networks, in particular fiber optics networks, are provided with protection mechanisms against failures of their network elements and/or fiber spans.

In MS-SPRING (Multiplexed-Shared Protection Ring) networks, for example, a shared protection mechanism is implemented for automatic traffic restoration should any faults occur in the connection fibers.

MS-SPRING networks perform automatic traffic restoration through a synchronized rerouting of such traffic, which is anyway performed at each ring node. This operation is controlled by a protocol consisting of 16-bit patterns, which are continuously exchanged between adjacent nodes. Said protocol and the corresponding operations with reference to the various bit patterns are defined by many international Standards issued by ANSI, ITU-T and ETSI.

Reference to this purpose could be made e.g. to ITU-T G.841.

Standards define two MS-SPRING network types, one for two-fiber rings, i.e. each ring node is connected to another node by a span consisting of only two fiber optics carrying signals propagating in opposite directions between them, the other for four-fiber rings, capable of carrying higher traffic.

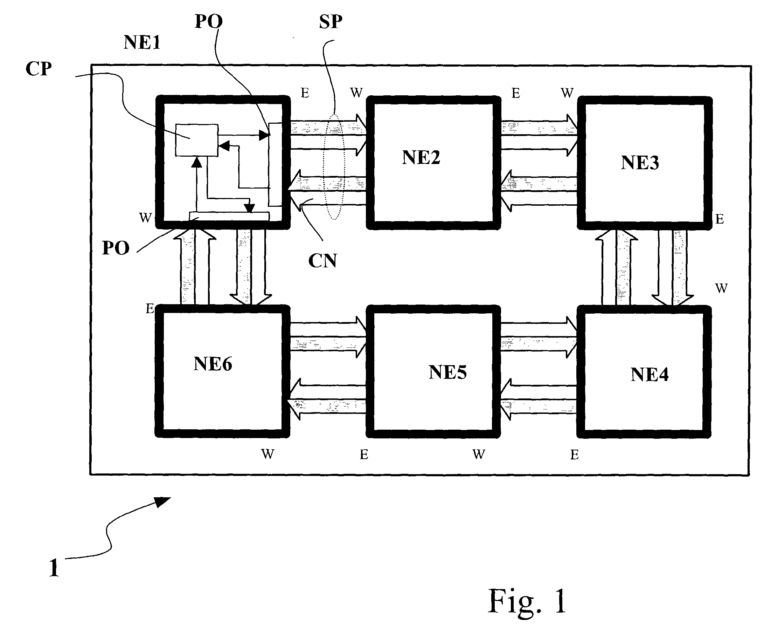

In Figure 1 a basic schematics of a 2-fiber MS-SPRING network ring 1 is represented. Said ring 1 comprises six network elements NE, also called network nodes. In general, the network elements NE in an MS-SPRING network may range from 2 to 16 (or also higher in certain circumstances). Each network element NE comprises two bi-directional communication gates PO, namely each gate operating for both transmission and reception. One of the communication gates PO is dedicated to the traffic transmitted in clockwise direction E and the other to the traffic transmitted in counter-clockwise direction W.

Two adjacent network elements NE in the ring 1 are joined by a span SP consisting of two connections CN, each one obtained by means of a fiber optics and carrying the traffic in opposite directions, namely one in a clockwise direction E and the other in a counter-clockwise direction W.

In order to obtain traffic protection without too much burden for the bandwidth utilization, bandwidth in MS-SPRING network ring 1 is split in two halves of equal capacity, called working capacity (working channel) and protection capacity (protection channel). In Figure 1 they are identified by a different color, grey or white, of the arrows representing the connections CN. Working channel is used for high priority traffic, whereas protection channel is used for low priority traffic, namely a traffic that may go lost should a failure occurr.

Protection in MS-SPRING network ring 1 is implemented according to a so-called "Bridge & Switch" mechanism, which comprises the step of rerouting traffic by properly modifying the inner connections of the network elements, i.e. switching over from working channel to protection channel.

A Bridge operation will substantially cause a node to transmit the same traffic both on the working channel and protection channel, whereas a Switch operation selects the traffic passing on the protection channel instead of the traffic passing on the working channel.

According to such a protection technique, called APS (Automatic Protection Switch), each network element must be provided with a device inside, called APS controller, which is capable of detecting line failures, transmitting and receiving information related to the other network elements and performing Bridge and Switch switching.

Four-fiber rings, unlike two-fiber rings, can support working capacity and protection capacity on respective fibers instead of supporting them both on one fiber alone. For this reason, 4-fiber rings offer other advantages in addition to the possibility of doubling traffic volume. In fact, 4-fiber MS-SPRINGs are able to overcome multiple span failures without loss of any traffic, in particular the failures affecting only the working channel, whereas 2-fiber MS- SPRINGs are only able to overcome one failure at a time without traffic loss, since one single failure will affect both the working channel and protection channel of one span, because they are carried by the same fiber.

A failure may be originated by a fiber interruption, degradation of the fiber itself or of its connector or by a failure of the optical interface or similar component.

In spite of the advantages of 4-fiber MS-SPRINGs, quite often 2-fiber rings are first laid, with such 2-fiber rings being possibly upgraded to 4-fiber rings at a later time. This causes some drawbacks, because if additional fibers were not preventively laid, extra digging work will be required to lay the additional fibers, with consequent high costs and huge impact on the territory.

Therefore, it is the object of the present invention to solve the above drawbacks and to provide a method for upgrading a fiber optics network ring, in particular MS-SPRING, having a more efficient and improved performance with respect to the existing solutions.

In this frame, it is the main object of the present invention to provide a method for upgrading a fiber optics network ring, in particular MS-SPRING, which does not require the laying of further fiber optics.

These and further objects are obtained by a method for upgrading a fiber optics network ring, in particular MS-SPRING, incorporating the features of the annexed claims, which form an integral part of the present description.

The basic idea of the present invention is to use the 2-fiber ring as a 4-fiber ring by employing one of the two fibers for bi-directionally carrying the high priority traffic, or protected traffic, and by using the second of said two fibers for bi-directionally carrying the low priority traffic.

The present invention relates to a method for upgrading a fiber optics network ring comprising: a number of network elements; and fiber optics spans connecting the network elements to form a ring, each fiber optics span comprising a first number of fiber optics on which traffic travels in a respective single direction. The method is characterized by comprising the step of providing said first number of fiber optics with a bi-directional travelling functionality so that the functionality associated to a ring having a second number of fiber optics is obtained, the second number of fiber optics being greater than the first one.

The invention also concerns a fiber optics network ring comprising: a number of network elements; and fiber optics spans connecting the network elements to form a ring, each fiber optics span comprising a first number of fiber optics on which traffic travels in a respective single direction. The ring according to the invention is characterized by comprising means for providing said first number of fiber optics with a bi-directional travelling functionality so that the functionality associated to a ring having a second number of fiber optics is obtained, the second number of fiber optics being greater than the first one.

Further objects, features and advantages of the present invention will be clear from the following detailed description and annexed drawings, which are supplied by way of non limited example only, wherein:
- Figure 1 shows a basic diagram of a 2-fiber MS-SPRING network ring according to the known state of the art;
- Figures 2a, 2b and 2c show some basic diagrams of details of MS-SPRING network rings illustrating the method for upgrading a fiber optics network ring, in particular MS-SPRING, according to the present invention; and
- Figure 3 shows a basic diagram of an apparatus incorporating the method for upgrading a fiber optics network ring, in particular MS-SPRING, according to the present invention.

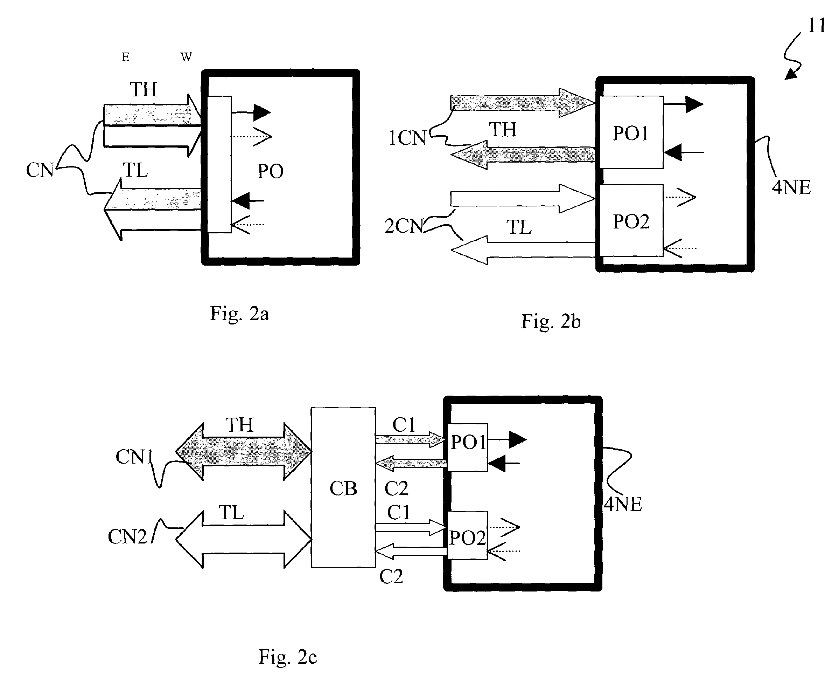

The basic schematics shown in figures 2a, 2b and 2c illustrate the method for upgrading a fiber optics network ring, in particular MS-SPRING, according to the present invention.

The basic idea of the present invention is to use the 2-fiber ring as a 4-fiber ring by employing one of the two fibers for bi-directionally carrying the high priority traffic, or protected traffic, and by using the second of said two fibers for bi-directionally carrying the low priority traffic.

Figure 2a is representing a basic diagram of the 2-fiber ring 1 of Figure 1, wherein both a high priority traffic TH and low priority traffic TL are carried through the bi-directional gate PO and connections CN.

Figure 2b shows a detail of a 4-fiber ring 11, wherein a first fiber pair 1CN carries the high priority traffic TH in both directions, whereas a second fiber pair 2CN carries the low priority traffic TL. The first pair 1CN is associated to a first bi-directional gate PO1 of a node 4NE for 4-fiber rings, whereas the second pair 2CN is associated to a second bi-directional gate PO2 pertaining to the same node 4NE.

In Figure 2c a detailed basic diagram of a 2-fiber ring 21 according to the present invention is shown, the figure illustrating a first fiber CN1 and a second fiber CN2, which fibers carry high priority traffic TH and low priority traffic TL, respectively, in a bi-directional manner on a single fiber. Therefore, an interface block CB is provided for adapting the bi-directional high priority traffic TH, which is single-fiber bidirectionally travelling on the first fiber CN1, for two-fiber unidirectional transportation towards the bi-directional gate P01. Said unidirectional transportation on two fibers is symbolized by optical connections C1 and C2, incoming and outgoing, respectively, which connect the gate PO1 to the interface block CB. Similarly, the interface block CB will adapt the single-fiber bi-directional low priority traffic TL, which is travelling on the second fiber CN2, to two-fiber unidirectional transportation towards the bi-directional gate PO2 of the node 4NE.

Thus, it is not necessary to lay new fibers, since the first fiber CN1 and second fiber CN2 correspond to the fibers CN of Figure 2a. The node 4NE is the same as the node of Figure 2b. In other words, in order to implement a four-fiber ring starting from a two-fiber ring, it is possible to use the interconnection fibers CN1 and CN2, which were already laid and the standard nodes 4NE. The only additional step is providing proper interface blocks CB able to implement single-fiber bi-directional transmission on both fibers CN1 and CN2. Possibly, a further additional step is providing corresponding short lengths of fibers for unidirectional transmission between interfaces and corresponding network elements.

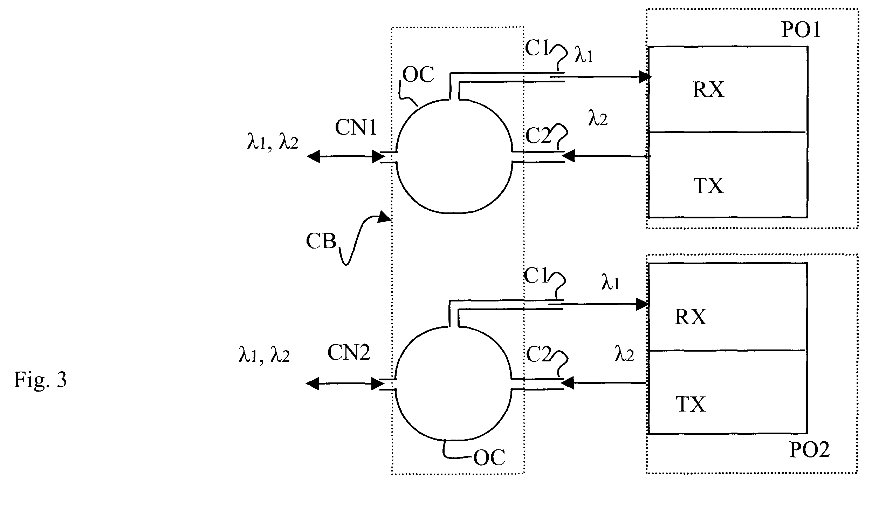

The interface block CB shown by way of example in Figure 3 comprises e.g. for each fiber CN1 an optical circulator, interfacing an optical transmitter TX and an optical receiver RX contained in each bi-directional gate PO1 or PO2. The optical circulator OC can be employed using two different wavelengths λ1 and λ2 pertaining to the second window (1300 nm area) or pertaining to the third window (1500 nm area). Thus, upgrading the fiber optics network can take place without having to change the optical transmitters TX of gates PO1 and PO2. This solution also has low insertion losses and a good tolerance to reflections.

It is obvious that in association to the network ring 21 described above according to the present invention a control method must be provided for controlling the reflections that may occur in the instance of a span interruption. This can be done by introducing a direction signaling bit in the SDH frame or by utilizing, for the same signal, a byte arrangement which is available in the control bytes implementing MS-SPRING protection.

From the above description the features of the present invention, as well as the relevant advantages thereof, are now clear.

Through the method for upgrading a fiber optics network ring, in particular MS-SPRING, according to the present invention, extra digging work for laying additional fibers can be advantageously avoided, while obtaining the advantages of the 4-fiber operation all the same.

There have thus been shown and described a novel method and a novel telecommunication network ring which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

As an alternative, a wavelength selective coupler operating at 1300 and 1500 nm wavelength can be inserted instead of the optical circulator OC. Said selective coupler LSA operates at 1300 nm in one direction and at 1500 nm in the other direction for bi-directional communication on the same fiber using wavelengths in two different fiber windows. In this instance one of the transmitter has to be replaced.

The selective coupler LSA may also be chosen for operation with both working wavelength in the 1500 nm window, so as to exploit the low attenuation values in the fiber and possibly may use an optical amplifier with erbium doped fiber. In this instance, wavelength controlled transmitters should be used and the original node transmitters be replaced.

The use of optical amplifiers is also possible with optical circulators.

## Claims

1. Method for upgrading a fiber optics network ring, said fiber optics network ring comprising:
- a number of network elements (NE);
- fiber optics spans (SP) connecting the network elements (NE) to form a ring, each fiber optics span comprising a first number of fiber optics (CN1, CN2) on which traffic (TH, TL) travels in a respective single direction,
the method being characterized by comprising the step of providing said first number of fiber optics (CN1, CN2) with a bi-directional travelling functionality so that a functionality associated to a ring (11) having a second number of fiber optics (1CN, 2CN) is obtained, the second number of fiber optics being greater than the first one.

2. Method according to claim 1, characterized in that said step of providing said first number of fiber optics (CN1, CN2) with a bi-directional travelling functionality comprises the step of providing interface blocks (CB), said interface blocks (CB) being installed between the nodes (4NE) of the ring (21), which are able to operate with the second number of fiber optics (1CN, 2CN), and the fiber optics (CN1, CN2) pertaining to said first number of fiber optics.

3. Method according to claim 2, characterized in that the step of providing interface blocks (CB) comprises the step of providing interface blocks (CB) comprising optical circulators (OC).

4. Method according to claim 2, characterized in that the step of providing interface blocks (CB) comprises the step of providing interface blocks (CB) comprising selective wavelength couplers.

5. Method according to claim 4, characterized in that the step of providing interface blocks (CB) comprising selective wavelength couplers comprises the step of operating said wavelength selective couplers in a first working window for one direction and in a second working window for the other direction.

6. Method according to claim 5, characterized in that the step of operating said wavelength selective couplers comprises the step of operating in a first 1300 nm working window for one direction and in a second 1500 nm working window for the other direction.

7. Method according to claim 3, characterized in that said step of providing interface blocks (CB) comprising optical circulators (OC) wavelength selective couplers comprises the step of operating said couplers in one working window for both directions and by comprising the further step of providing controlled wavelength transmitters (TX).

8. Method according to claim 7, characterized in that said step of operating said couplers in one working window comprises the step of operating in a 1500 nm working window.

9. Method according to one or more of the previous claims, characterized in that the first number of fiber optics (CN1, CN2) is two and the second number of fiber optics is four (1CN, 2CN).

10. Method according to any of the preceding claims, characterized in that the fiber optics network ring is an MS-SPRING.

11. Fiber optics network ring comprising:
- a number of network elements (NE);
- fiber optics spans (SP) connecting the network elements (NE) to form a ring, each fiber optics span comprising a first number of fiber optics (CN1, CN2) on which traffic (TH, TL) travels in a respective single direction,
the ring being characterized by comprising means for providing said first number of fiber optics (CN1, CN2) with a bi-directional travelling functionality so that a functionality associated to a ring (11) having a second number of fiber optics (1CN, 2CN) is obtained, the second number of fiber optics being greater than the first one.

12. Fiber optics network ring according to claim 11, characterized in that said means for providing said first number of fiber optics (CN1, CN2) with a bi-directional travelling functionality comprise interface blocks (CB), said interface blocks (CB) being installed between the nodes (4NE) of the ring (21), which are able to operate with the second number of fiber optics (1CN, 2CN), and the fiber optics (CN1, CN2) pertaining to said first number of fiber optics.

13. Fiber optics network ring according to claim 12, characterized in that said interface blocks (CB) comprise optical circulators (OC).

14. Fiber optics network ring according to claim 12, characterized in that said interface blocks (CB) comprise selective wavelength couplers.

15. Fiber optics network ring according to claim 14, characterized in that said selective wavelength couplers operate in a first working window for one direction and in a second working window for the other direction.

16. Fiber optics network ring according to claim 13, characterized in that said wavelength selective couplers operate in one working window for both directions and in that it further comprises controlled wavelength transmitters (TX).

17. Fiber optics network ring according to one or more of claims 11-16, characterized in that the first number of fiber optics (CN1, CN2) is two and the second number of fiber optics is four (1CN, 2CN).

18. Fiber optics network ring according to any of claims 11-17, characterized in that it is an MS-SPRING.

19. Use of a network element (NE) normally employed in a fiber optics network ring comprising a second number of fiber optics (1CN, 2CN) for upgrading a fiber optics network ring comprising a first number of fiber optics (CN1, CN2) wherein the second number of fiber optics is greater than the first one.
